# EUROPÄISCHE PATENTSCHRIFT

(11) **EP 0 437 679 B1**
(45) Veröffentlichungstag und Bekanntmachung des Hinweises auf die Patenterteilung: **08.12.1993**
(21) Anmeldenummer: 90119583.4
(22) Anmeldetag: 12.10.1990
(51) Int. Cl.: B09B 3/00, F23G 5/00, F23J 9/00, A62D 3/00

(54) **Verfahren zum Behandeln von Rückständen einer Abfallverbrennungsanlage und Abfallverbrennungsanlage zur Durchfürhung des Verfahrens**
Process for the treatment of ash in incinerator plants and an incinerator plant for this process
Procédé pour le traitement des résidus d'incinérateurs des déchets et incinérateurs pour la mise en oeuvre du procédé

(30) Priorität: 29.11.1989 DE 3939344
(43) Veröffentlichungstag der Anmeldung: 24.07.1991
(73) Patentinhaber: DEUTSCHE BABCOCK ANLAGEN GMBH, 46049 Oberhausen (DE)
(72) Erfinder: Schneider, Dietmar, Dr., d-4000 Düsseldorf (DE); Horch, Klaus, Dr., d-4152 Kempen (DE)
(74) Vertreter: Planker, Karl-Josef, Dipl.-Phys.

(56) Entgegenhaltungen:
- EP-A- 0 340 644
- DE-A- 3 716 231
- DE-A- 3 728 487
- DE-A- 3 815 632
- US-A- 4 823 740

## Beschreibung

Die Erfindung betrifft ein Verfahren zum Behandeln von Rückständen einer Abfallverbrennungsanlage gemäß dem Oberbegriff des Anspruchs 1 und eine Abfallverbrennungsanlage zur Durchführung dieses Verfahrens gemäß dem Oberbegriff des Anspruchs 12.

In Abfallverbrennungsanlagen fallen als feste Rückstände
- Rostasche (Rostabwurf und Rostdurchfall) hinter und unter dem Verbrennungsrost
- Kesselasche in den Rauchgaszügen und
- Filterstaub bei der Rauchgasreinigung an.

Diese Rückstände enthalten folgendene Stoffe, die ihre Verwertbarkeit stark beeinträchtigen:
- unverbrannten Kohlenstoff,
- lösliche Metalle und deren Verbindungen,
- halogenierte Kohlenwasserstoffe, wie z.B. Dioxine, Furane und deren Vorläufer.

Der Anteil dieser unerwünschten Inhaltsstoffe ist bei der Rostasche geringer als bei den beiden anderen Rückständen. Er nimmt mit fallendem Korndurchmesser der Rückstände zu.

Es ist derzeit noch üblich, die Rostasche auf Hausmüll- oder Monodeponien abzulagern oder z.B. im Straßenbau wiederzuverwerten. Die Filterstäube werden dagegen in Sonderdeponien abgelagert. Vor der Lagerung werden sie in immer größerem Maße behandelt.

Zu den Behandlungsmethoden des Flugstaubes gehören z.B. die thermische Behandlung unter Sauerstoffmangel zum Abbau der halogenierten Kohlenwasserstoffe (DE-OS 37 03 984) und das sogenannte 3R-Verfahren, bei dem der Flugstaub mit Waschwasser einer Waschanlage für Rauchgas zum Abbau von Metallen behandelt wird und ggf. der gewaschene Flugstaub in den Verbrennungsraum zurückgeführt wird (DE-OS 33 20 466).

Außerdem sind verschiedene Einschmelzverfahren bekannt. Die DE-OS 37 16 231 betrifft z.B. ein Verfahren, bei dem der Flugstaub zum Abbau von Metallen und toxischen Kohlenwasserstoffen mit einem Plasmabrenner eingeschmolzen wird.

Kesselasche wird meist mit der Rostasche abgezogen. Sie ist jedoch wegen ihrer kleinen Korndurchmesser problematischer.

Zur Behandlung der Rostasche ist aus der EP-A2 241 635 bekannt, die Feinfraktion (Kleiner 0,8 mm) abzutrennen und die Grobfraktion wiederzuverwenden.

Der Wiederverwertung und der Deponierung der Rostasche und gegebenenfalls Kesselasche wird jedoch wegen der wasserlöslichen, teilweise toxischen Inhaltsstoffe immer mehr Widerstand entgegengesetzt.

Ein gattungsgemäßes Verfahren und eine gattungsgemäße Vorrichtung zur Behandlung von sogenannter Schlacke (Rostasche) und sogenannter Flugasche (Kesselasche und Filterstaub) werden von H. Ruegg (Schlackenschmelzanlage in: Thomé-Kozmiensky, K. J. (Hrsg.) Recycling Berlin '79, Band 1, EF-Verlag, Berlin 1979, S. 571 - 574) beschrieben. Dabei fällt die Schlacke von einem Rost einer Müllverbrennungsanlage direkt in eine Schmelzkammer, von wo sie mittels eines mit Luft betriebenen Ölbrenners abgeschmolzen wird. Die flüssige Schlacke rinnt in ein Wasserbad. Außerdem kann die Flugasche in einer Brennkammer mit einem Brenner geschmolzen werden. Die geschmolzene Flugasche gelangt ebenfalls ins Wasserbad. Die Rauchgase werden in den Feuerraum geleitet.

Die Brennkammer, die Schmelzkammer und das Wasserbad dieser Schlackenschmelzanlage sind zum Feuerraum hin offen, was zu einem schlechten Wirkungsgrad der durch die Brenner eingebrachten Energie führt. Die Anlage ist außerdem durch die beiden Schmelzräume, Schmelzkammer und Brennkammer, sehr aufwendig.

Ein wesentlicher Nachteil ist auch, daß die Verweilzeit der Rückstände in den Schmelzräumen nicht kontrollierbar ist. Ein sicheres Einschmelzen der Rückstände, der vollständige Ausbrand sowie der Abbau der halogenierten Kohlenwasserstoffe kann daher nicht gewährleistet werden. Darüber hinaus führt eine derartige Schlackenschmelzanlage zu einer Anreicherung der Müllverbrennungsanlage mit Metallen, die beim Schmelzen abdampfen.

Die erste Aufgabe der Erfindung besteht dementsprechend darin, ein Verfahren zum Behandeln von Rückständen einer Abfallverbrennungsanlage gemäß dem Oberbegriff des Anspruchs 1 zu entwickeln, bei dem ein sicheres Einschmelzen der Rückstände bei einem guten Wirkungsgrad der eingesetzten Energie gewährleistet wird. Die zweite Aufgabe ist, eine Abfallverbrennungsanlage gemäß dem Oberbegriff des Anspruchs 12 zu entwickeln, die zur Durchführung des Verfahrens gemäß Anspruch 1 geeignet ist.

Die erste Aufgabe wird durch die kennzeichnenden Merkmale des Anspruchs 1, die zweite durch die des Anspruchs 12 gelöst.

Beim Einschmelzen der Rückstände in dem separaten Schmelzofen mit einem im wesentlichen geschlossenen Schmelzraum wird die zum Schmelzen eingesetzte Energie wesentlich besser genutzt als in dem offenen System der Schlackenschmelzanlage des Standes der Technik. Es wird z.B. die Gewölbestrahlung ausgenutzt und es gelangen keine Brüden aus einer Abkühlvorrichtung in den Schmelzraum.

In dem separaten Schmelzofen, in den die Rückstände, ggf. nach Aussortieren größerer Bestandteile, gefördert werden, ist die Verveilzeit der Rückstände im Schmelzraum kontrollierbar. Dadurch werden die Rückstände vollständig und sicher aufgeschmolzen und damit ein vollständiger Ausbrand des unverbrannten Kohlenstoffs und ein vollständiger Abbau der halogenierten Kohlenwasserstoffe sichergestellt.

Die teilweise Entfernung von Metallen aus dem Flugstaub vor der Förderung in den Schmelzofen verhindert eine größere Anreicherung der Metalle, insbesondere der Metalle mit hohem Dampfdruck, in der Abfallverbrennungsanlage. Daher ist das Verfahren besonders gut für Müllverbrennungsanlagen geeignet, bei denen eine teilweise Entfernung der Metalle aus dem Filterstaub vorgesehen ist. Es eignet sich außerdem auch gut zum Nachrüsten von Altanlagen.

Ein weiterer Vorteil des Verfahrens ist, daß bei einer Neuanlage der Verbrennungsrost kleiner ausgelegt werden kann (z.B. bei einem Walzenrost statt fünf nur vier Walzen), da ein vollständiger Ausbrand durch das Einschmelzen sichergestellt wird.

Vorteil der Merkmale des Anspruchs 2 ist, daß man aus der Restschmelze eine völlig glasartige Schlacke erhält. Aus dieser Schlacke sind der unverbrannte Kohlenstoff, die halogenierte Kohlenwasserstoffe und zum großen Teil die Metalle und Metallverbindungen entfernt. Restliche Schadstoffe sind in der glasartigen Matrix der Schlacke eingebunden. Diese glasartige Schlacke kann wiederverwendet oder auf Boden- oder Mineralstoffdeponien abgelagert werden. Die neben der glasartigen Schlacke abgezogene, mit Metallen angereicherte Schlacke kann einer Aufbereitung zugeführt werden.

Das Waschen des Filterstaubs gemäß Anspruch 3 mit Waschwasser ist eine einfache Methode zur teilweisen Entfernung von Metallen. Dabei werden vorteilhaft gerade die Metalle, die im Schmelzofen abdampfen, wie Cd oder Zn, mit einem hohen Wirkungsgrad ausgewaschen. Das Waschen mit Waschwasser aus einem Rauchgaswäscher ist besonders für Abfallverbrennungsanlagen mit einer nassen Rauchgaswäsche geeignet.

Das Merkmal des Anspruchs 4 erhöht die Betriebssicherheit des Verfahrens. Die von den größeren Bestandteilen befreite Rost- und Kesselasche ist gut zu transportieren und einzuschmelzen.

Durch das Merkmal des Anspruchs 5 werden die größeren Bestandteile einfach in einem Wasserbad abgekühlt. Sie können anschließend gegebenenfalls von Metallteilen befreit, zerkleinert, und in den Kessel zurückgeführt werden. Das Merkmal ist besonders bei Altanlagen, die schon einen Naßentascher aufweisen, geeignet.

Durch das Merkmal des Anspruchs 6 wird der Energieverlust gering gehalten und das Einführen der Rückstände in das Schmelzbad des Schmelzofens vereinfacht. Die gasdichte Fördereinrichtung verhindert das Eindringen von Kaltluft.

Die Rückführung eines Teilstromes des Abgases aus dem Schmelzofen durch die Förderleitung gemäß Anspruch 7 verhindert zu starkes Abkühlen der Rückstände. Die Rückführung des restlichen Abgases durch die dosierbare Abgasleitung verhindert ein Überhitzen der Fördereinrichtung und dient damit der Betriebssicherheit. Darüber hinaus kann der Teilstrom des Abgases, der durch die Förderleitung geleitet wird, eingestellt werden und damit die Temperatur der Rückstände in der Förderleitung beeinflußt werden.

Neben dem hohen erreichbaren Wirkungsgrad führt der Einsatz von Sauerstoffbrennern gemäß Anspruch 8 zu einer wesentlich geringeren Abgasmenge des Schmelzofens als z.B. der Einsatz von Luftbrennern. Die Rückführung des Abgases in den Feuerraum wird dadurch vereinfacht.

Die Merkmale des Anspruchs 9 und des Anspruchs 10 sind zum sicheren Aufschmelzen der Rückstände von Vorteil. Das Merkmal des Anspruchs 10 gewährleistet darüber hinaus, daß die Metalle mit einem hohen Dampfdruck zum großen Teil abdampfen und die übrigen Metalle aufschmelzen und im Schmelzbad absinken.

Vorteil des Merkmals des Anspruchs 11 ist eine Verbesserung des Schmelzprozesses.

Die Abfallverbrennungsanlage mit der Vorrichtung zum Behandeln von Rückständen gemäß Anspruch 12 eignet sich besonders gut zur Durchführung des Verfahrens gemäß Anspruch 1. Der separate Schmelzofen, der bis auf Öffnungen geschlossen ist, und die Fördervorrichtung ermöglichen ein sicheres Einschmelzen bei kontrollierbaren Verweilzeiten.

Die Merkmale des Anspruchs 13 sind besonders gut zur Durchführung des Verfahrens gemäß Anspruch 2 geeignet.

Das Merkmal des Anspruchs 14 ist besonders gut zur Durchführung des Verfahrens gemäß Anspruch 4 geeignet. Durch das Stabsieb wird die Verstopfungsgefahr verringert. Es ist darüber hinaus widerstandsfähig.

Die Merkmale des Anspruchs 15 sind besonders gut zur Durchführung des Verfahrens gemäß Anspruch 5 geeignet.

Das Merkmal des Anspruchs 16 verbessert die Betriebssicherheit der Abfallverbrennungsanlage. Bei einem eventuellen Ausfall der Vorrichtung zum Behandeln von Rückständen, z.B. der Fördervorrichtung oder des Schmelzofens, kann die Klappe unter das Stabsieb geschwenkt werden. Die Rost- und Kesselasche gelangt dann vollständig in den Naßentascher.

Das Merkmal des Anspruchs 17 ermöglicht eine einfache Sammlung der Rost- und Kesselasche zum Transport in den Schmelzofen. Es ist für Neuanlagen, aber auch zum nachträglichen Einbau in Altanlagen geeignet.

Vorteil des Merkmals des Anspruchs 18 ist, daß sich keine bewegten Teile in dem heißen Innenraum der Förderrinne befinden.

Das Merkmal des Anspruchs 19 ist besonders gut zur Durchführung des Verfahrens gemäß Anspruch 7 geeignet. Durch die Dosierklappe kann der Anteil des direkt zum Feuerraum zurückgeleiteten Abgases und damit der durch die Fördervorrichtung zurückgeleitete Anteil mit Hilfe einer einfachen Vorrichtung eingestellt werden.

Das Merkmal des Anspruchs 20 ist besonders gut zur Durchführung des Verfahrens gemäß Anspruch 8 geeignet.

Die Erfindung soll anhand von Beispielen erläutert werden. Ein Beispiel ist in der Zeichung schematisch dargestellt.

Figur 1 zeigt ein Fließbild einer Abfallverbrennungsanlage.

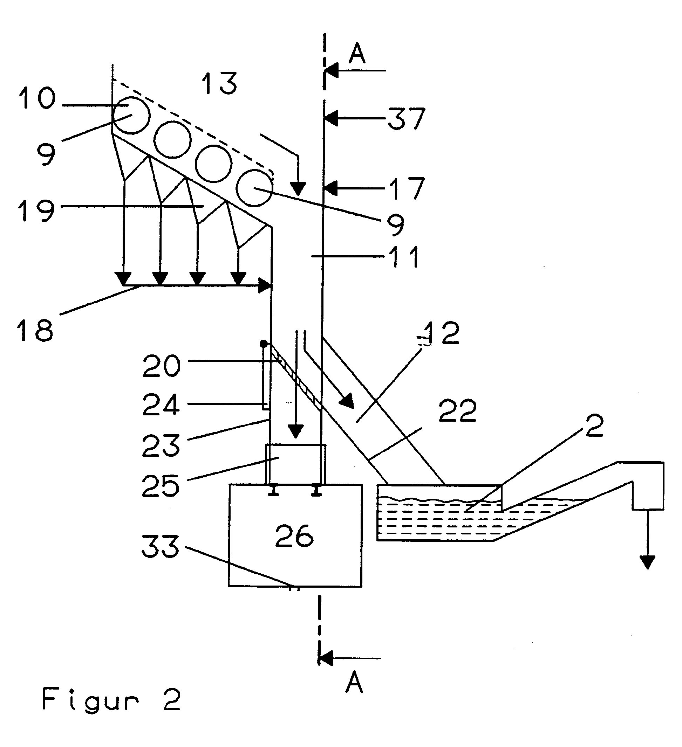

In Figur 2 ist die Vorrichtung zum Behandeln der Rückstände am Kessel vergrößert dargestellt.

Figur 3 zeigt einen Schnitt AA der in Figur 2 dargestellten Vorrichtung.

Eine Abfallverbrennungsanlage weist einen Kessel 1 mit einem Naßentascher 2, eine Rauchgasreinigungsanlage mit einem Elektrofilter 3 und einem zweistufigen Rauchgaswäscher 4, eine Waschanlage für Filterstaub 5, einen Saugzug 6, einen Kamin 7 und eine Vorrichtung zur Behandlung der Rückstände Rostasche, Kesselasche und Filterstaub auf.

Der Kessel 1 ist mit einer Vorrichtung 8 zur Aufgabe von Abfall, einem aus vier Walzen 9 bestehenden Walzenrost 10, einem Ascheschacht 11 und einem Grobascheschacht 12, einem Feuerraum 13, mehreren Rauchgaszügen 14 und zum Rauchgasstrom querliegenden Rohrbündeln 15 versehen. Die Rauchgaszüge 14 sind mit Sammelvorrichtungen 16 für die Kesselasche, die in eine an den Ascheschacht 11 angeschlossene Förderleitung 17 münden, versehen.

Der Ascheschacht 11 beginnt seitlich der in Bewegungsrichtung des Abfalls letzten Walze 9 des Walzenrostes 10 und setzt sich nach unten fort. Er erstreckt sich über die gesamte Länge der Walzen 9. In den Ascheschacht 11 mündet unterhalb des Walzenrostes 10 eine Förderleitung 18, an die Sammelvorrichtungen 19 für Rostdurchfall angeschlossen sind.

Unterhalb der Einmündung der Förderleitung 18 befindet sich im Ascheschacht 11 ein im spitzen Winkel zur Senkrechten angeordnetes Stabsieb 20, das den gesamten Querschnitt des Ascheschachtes 11 bedeckt. Der Abstand zwischen Stäben 21 des Stabsiebes 20 beträgt zwischen 100 und 300 mm, sie verlaufen parallel zueinander und senkrecht zu den Achsen der Walzen 9.

Der Grobascheschacht 12 zweigt vom Ascheschacht 11 ab und mündet von oben in den Naßentascher 2, der ein Wasserbad aufweist. Er verläuft im selben Winkel zur Senkrechten wie das Stabsieb 20 und bildet mit seiner unteren Wand 22 die Verlängerung des Stabsiebes 20.

Direkt unter dem Stabsieb 20 ist auf einer dem Grobascheschacht 12 gegenüberstehenden Wand 23 des Ascheschachtes 11 eine in den Ascheschacht 11 unter das Stabsieb 20 schwenkbare Klappe 24 befestigt. Die Fläche der Klappe 24 entspricht der des Stabsiebes 20.

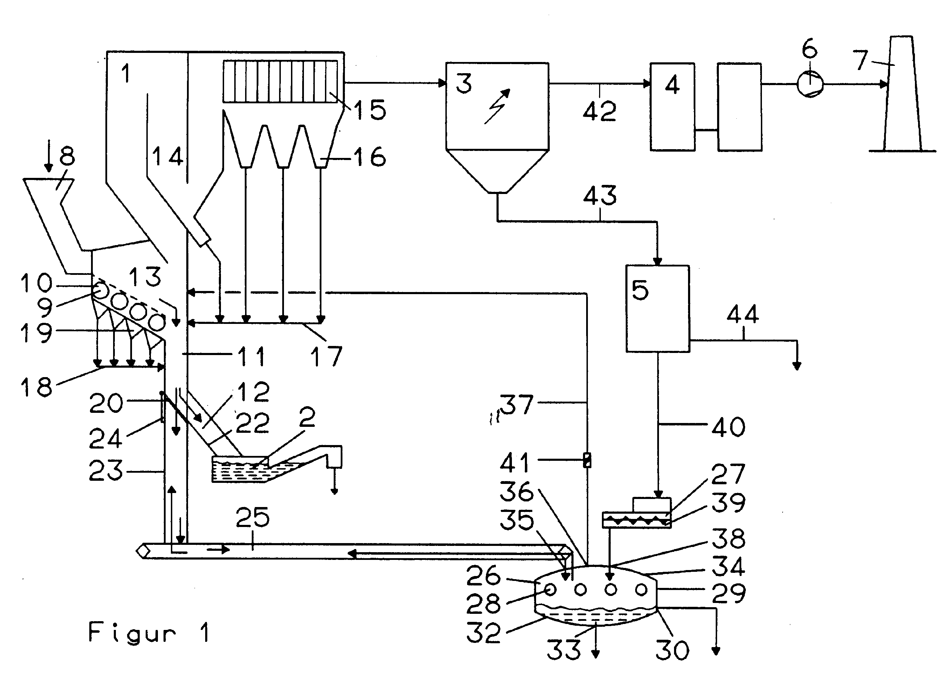

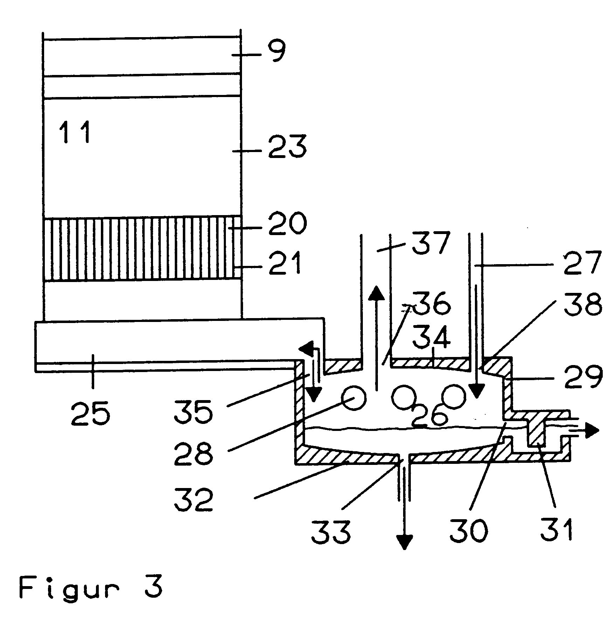

Die Vorrichtung zum Behandeln der Rückstände weist eine Fördervorrichtung, insbesondere eine Förderrinne 25, einen Schmelzofen 26 und eine Flugstaubzuführung 27 auf. Die Förderrinne 25 schließt sich nach unten an den Ascheschacht 11 an, ihre Förderrichtung verläuft (abweichend von dem Fließbild der Figur 1) parallel zu den Achsen der Walzen 9 (wie aus Figur 3 ersichtlich). Sie ist gasdicht und von oben an den Schmelzofen 26 angeschlossen.

Im oberen Drittel des Schmelzraumes befinden sich zwei bis zehn wassergekühlte, mit Heizöl oder Erdgas betriebene Sauerstoffbrenner 28.

Der Schmelzofen 26 weist an einer Seitenwand 29 auf einer Höhe von einem Viertel bis einem Drittel der Gesamthöhe seines Schmelzraumes eine Öffnung 30 zum Abzug der Restschmelze auf, an die ein beheizter Siphon 31 angeschlossen ist. Im zur Mitte hin leicht schräg nach unten verlaufenden Boden 32 des Schmelzraumes befindet sich in der Mitte eine Öffnung 33 zum Abzug der mit Metallen angereicherten Schmelze. An den beheizten Siphon 31 und an die Öffnung 33 schließen sich jeweils Kühlvorrichtungen für die Schmelzen an.

Eine Decke 34 des Schmelzofens 26 ist mit einer Öffnung 35 unter dem Anschluß der Förderrinne 25, einer weiteren Öffnung 36, an die eine Abgasleitung 37 für die Abgase des Schmelzofens 26 angeschlossen ist, und einer Öffnung 38, an die die Flugstaubzuführung 27 angeschlossen ist, versehen. Bis auf die Öffnungen 35, 36, 38, 30, 33 und ggf. eine Öffnung für Schmelzadditive ist der Schmelzraum geschlossen.

Die Flugstaubzuführung 27 weist eine Schnecke 39 zum Dosieren und Eintragen des Filterstaubs und eine Förderleitung 40, die die Waschanlage 5 für Filterstaub mit der Schnecke 39 verbindet, auf. Die Schnecke 39 ragt durch die Öffnung 38 in den Schmelzofen 26 und ist mit einer Kühlung versehen (in der Zeichnung nicht dargestellt).

Die Abgasleitung 37 ist mit einer Dosierklappe 41 versehen und mündet in den Feuerraum 13 des Kessels 1.

Kessel 1, Elektrofilter 3, Rauchgaswäscher 4, Saugzug 6 und Kamin 7 sind durch Rauchgasleitungen 42 verbunden. Der Elektrofilter 3 ist außerdem über eine Förderleitung 43 für den Filterstaub mit der Waschanlage 5 verbunden. Die Waschanlage 5 weist Wäscher, ggf. eine Entwässerungs- und Trocknungsvorrichtung, und einen Abzug 44 für Metallkonzentrat auf.

Bei einer Abfallverbrennungsanlage mit einem Durchsatz von etwa 20 t pro Stunde weist der Schmelzraum des Schmelzofens 26 folgende Maße auf: Höhe 2,00 m, Breite 2,50 m und Länge 6,00 m. Die Höhe eines Schmelzbades beträgt dabei etwa 0,50 m. Auf dieser Höhe von 0,50 m, d.h. auf Höhe der Oberfläche des Schmelzbades, befindet sich die Öffnung 30 mit dem daran angeschlossenen Siphon 31. Der Schmelzofen 26 ist mit insgesamt sechs Sauerstoffbrennern 28 ausgestattet, wobei sich auf beiden Längsseitenwänden je drei Brenner befinden. Der Abstand der Stäbe 21 des Stabsiebes 20 beträgt 200 mm.

In weiteren Beispielen der Erfindung weist die Flugstaubzuführung 27 entweder
- eine Förderleitung zu einem speziellen Sauerstoffbrenner zur Flugstaubschmelze oder
- eine Förderleitung und eine Lanze zur Flugstaubzuführung, die auf die Oberfläche des Schmelzbades zielt, auf.

Statt der Sauerstoffbrenner 28 können auch Luftbrenner eingesetzt werden. Die Fördervorrichtung kann auch ein Plattenband sein.

Im Betrieb wird der Abfall durch die Vorrichtung 8 aufgegeben, fällt auf den Walzenrost 10 und wird, während er über die Walzen 9 zum Ascheschacht 11 hin transportiert wird, unter Luftzufuhr verbrannt.

Das dabei entstehende Rauchgas steigt durch den Feuerraum 13 in die Rauchgaszüge 14, durchströmt sie und gelangt durch Rauchgasleitungen 42 zunächst in den Elektrofilter 3, anschließend in den Rauchgaswäscher 4, durchströmt den Saugzug 6 und verläßt die Abfallverbrennungsanlage durch den Kamin 7.

Ein Teil der im Rauchgas mitgerissenen festen Rückstände wird in den Sammelvorrichtungen 16 des Kessels 1 als Kesselasche gesammelt und durch die Förderleitung 17 in den Ascheschacht 11 gefördert.

In den Ascheschacht 11 wird auch die Rostasche gebracht. Sie besteht aus Rostabwurf, der hinter der in Bewegungsrichtung des Abfalls letzten Walze 9 in den Ascheschacht 11 fällt, und Rostdurchfall aus den Sammelvorrichtungen 19, der durch die Förderleitung 18 zum Ascheschacht 11 gefördert wird.

Rostasche und Kesselasche fallen auf das Stabsieb 20. Durch das Stabsieb 20 werden Bestandteile mit einem Durchmesser größer als der Abstand der Stäbe 21 (100 bis 300 mm) aussortiert und rutschen durch den Grobascheschacht 12 in den Naßentascher 2, in dem sie in einem Wasserbad abgeschreckt werden. Diese größeren Bestandteile werden ggf. sortiert, zerkleinert und in den Kessel 1 zurückgeführt.

Die vom Grobgut befreite Rost- und Kesselasche fällt auf die gasdichte Förderrinne 25. Sie wird in der Förderrinne 25 bei einer Temperatur von 400 bis 700 °C, insbesondere von 500 bis 600 °C, zum Schmelzofen 26 transportiert und durch die Öffnung 35 in den Schmelzraum des Schmelzofens 26 gebracht.

Der im Elektrofilter 3 aus dem Rauchgas entfernte Filterstaub wird über die Förderleitung 43 in die Waschanlage 5 gebracht und mit Waschwasser aus dem Rauchgaswäscher 4 zur teilweisen Entfernung der Metalle gewaschen. Der gegebenenfalls entwässerte und getrocknete Flugstaub wird über die Förderleitung 40 und die Schnecke 39 durch die Öffnung 38 in den Schmelzraum des Schmelzofens 26 gebracht.

Der Schmelzofen 26 wird durch die sechs mit Heizöl oder Erdgas betriebenen Sauerstoffbrenner 28 direkt beheizt. Ein Teilstrom des dabei entstehenden Abgases wird im Gegenstrom zu den Rückständen durch die gasdichte Förderrinne 25 zum Feuerraum 13 und der andere Teilstrom des Abgases durch die Abgasleitung 37 direkt zum Feuerraum 13 geleitet.

Der jeweilige Anteil des Abgases wird durch die Dosierklappe 41 in der Abgasleitung 37 eingestellt und wird u.a. durch die Temperatur in der Förderrinne 25 bestimmt.

Die Rückstände werden kontinuierlich bei einer Temperatur von 1 100 bis 1 500 °C, insbesondere 1 300 bis 1 500 °C, geschmolzen. Ihre Verveilzeit im Schmelzofen 26 beträgt 30 bis 90 Minuten. Gegebenenfalls werden dem Schmelzbad Schmelzadditive hinzugefügt.

Während des Schmelzens dampfen die Metalle mit hohem Dampfdruck, wie Cd, Zn, ab, werden mit dem Abgas in den Feuerraum 13 zurückgeführt und in der Waschanlage für Filterstaub 5 mit hohem Wirkungsgrad herausgewaschen. Die restlichen Metalle, wie Cu, Fe, schmelzen auf und sinken auf den Boden 32 des Schmelzofens 26. Sie werden in einer mit Metallen angereicherten Schmelze durch die Öffnung 33 im Boden 32 abgezogen, abgekühlt und einer Aufbereitung zugeführt.

Während des Schmelzens werden der unverbrannte Kohlenstoff und die halogenierten Kohlenwasserstoffe abgebaut. Die entstehende Restschmelze wird an der Oberfläche des Schmelzbades durch die Öffnung 30 über den beheizten Siphon 31 abgezogen und abgekühlt (z.B. im Wasserbad granuliert oder in Trockenkühlaggregaten zu Formstücken verarbeitet). Es entsteht eine glasartige, im wesentlichen von ihren unerwünschten Inhaltsstoffen befreite Schlacke, bei der eventuelle restliche Schadstoffe in einer glasartigen Matrix eingebunden sind. Sie eignet sich zur Wiederverwendung im Landschaftsbau und zum Deponieren auf Boden- oder Mineralstoffdeponien. Während des Schmelzens wird das Volumen der Aschen und des Filterstaubs um etwa 70 bis 80 % verringert.

## Patentansprüche

1. Verfahren zum Behandeln von Rückständen einer Abfallverbrennungsanlage, wobei
die Rückstände bestehend aus Rostasche, Kesselasche und Filterstaub unter Zufuhr von Energie kontinuierlich geschmolzen werden,
die erschmolzenen Rückstände abgekühlt werden und beim Schmelzen entstandenes Abgas in einen Feuerraum der Abfallverbrennungsanlage geleitet wird,
dadurch gekennzeichnet, daß
die Rückstände in einem separaten Schmelzofen (26) geschmolzen werden, wobei
die Rostasche, ggf. nach Aussortieren größerer Bestandteile, und die Kesselasche gemeinsam in einer Fördervorrichtung (25) zum Schmelzofen (26) gefördert werden,
aus dem Filterstaub zunächst teilweise Metalle entfernt werden und der Filterstaub anschließend in den Schmelzofen (26) gefördert wird.

2. Verfahren nach Anspruch 1, dadurch gekennzeichnet, daß eine mit Metallen angereicherte Schmelze am Boden (32) des Schmelzofens (26) abgezogen und abgekühlt wird und an einer Seitenwand (29) des Schmelzofens (26) auf Höhe einer Oberfläche eines Schmelzbades eine Restschmelze aus dem Schmelzofen (26) abgezogen und abgekühlt wird.

3. Verfahren nach Anspruch 1 oder 2, dadurch gekennzeichnet, daß der Filterstaub zur teilweisen Entfernung der Metalle in der Waschanlage (5) mit Waschwasser, insbesondere mit dem Waschwasser aus einem Rauchgaswäscher (4), gewaschen wird.

4. Verfahren nach einem der Ansprüche 1 bis 3, dadurch gekennzeichnet, daß vor der Einleitung der Rostasche und Kesselasche in die Fördervorrichtung (25) Bestandteile, deren Durchmesser größer sind als ein Wert zwischen 100 bis 300 mm, aussortiert werden.

5. Verfahren nach Anspruch 4, dadurch gekennzeichnet, daß diese größeren Bestandteile der Rost- und Kesselasche in einen Naßentascher (2) geleitet werden.

6. Verfahren nach Anspruch 1 bis 5, dadurch gekennzeichnet, daß die Rostasche und die Kesselasche bei einer Temperatur von 400 bis 700 °C, insbesondere von 500 bis 600 °C, durch die gasdichte Fördervorrichtung (25) zum Schmelzofen (26) gefördert wird.

7. Verfahren nach einem der Ansprüche 1 bis 6, dadurch gekennzeichnet, daß ein Teilstrom des Abgases des Schmelzofens (26) im Gegenstrom zur Rostasche und Kesselasche durch die gasdichte Fördervorrichtung (25) und der andere Teilstrom des Abgases durch eine dosierbare Abgasleitung (37) zum Feuerraum (13) der Abfallverbrennungsanlage geleitet werden.

8. Verfahren nach einem der Ansprüche 1 bis 7, dadurch gekennzeichnet, daß der Schmelzofen (26) durch mit Heizöl oder Erdgas betriebene Sauerstoffbrenner (28) direkt beheizt wird.

9. Verfahren nach einem der Ansprüche 1 bis 8, dadurch gekennzeichnet, daß die Rückstände im Schmelzofen bei einer Temperatur von 1 100 bis 1 500 °C, insbesondere 1 300 bis 1500 °C, geschmolzen werden.

10. Verfahren nach einem der Anspüche 1 bis 9, dadurch gekennzeichnet, daß die Verweilzeit der Rückstände im Schmelzofen (26) 30 bis 90 Minuten beträgt.

11. Verfahren nach einem der Ansprüche 1 bis 10, dadurch gekennzeichnet, daß dem Schmelzbad des Schmelzofens (26) Schmelzadditive hinzugeführt werden.

12. Abfallverbrennungsanlage zur Durchführung des Verfahrens gemäß Anspruch 1,
mit einem Verbrennungsrost, einem Ascheschacht und einer Abkühlvorrichtung für Rückstände,
einer Vorrichtung zum Behandeln von Rückständen mit mindestens einem Schmelzraum und mindestens einem Brenner,
dadurch gekennzeichnet,
daß die Vorrichtung zur Behandlung von Rückständen einen separaten Schmelzofen (26) mit einer Öffnung (38) zur Zufuhr von Filterstaub und einer Öffnung (35) zur Zufuhr von Rost- und Kesselasche und eine Fördervorrichtung (25) zur Förderung von Rost- und Kesselasche zum Schmelzofen (26) aufweist.

13. Abfallverbrennungsanlage gemäß Anspruch 12, dadurch gekennzeichnet, daß der Schmelzofen (26) am Boden (32) eine Öffnung (33) zum Abzug der mit Metallen angereicherten Schmelze und an einer Seitenwand (29) eine Öffnung (30) zum Abzug der Restschmelze aufweist.

14. Abfallverbrennungsanlage gemäß Anspruch 12 oder 13, dadurch gekennzeichnet, daß der Aschenschacht (11) mit einem Stabsieb (20) versehen ist, wobei der Abstand der Stäbe (21) zwischen 100 und 300 mm beträgt.

15. Abfallverbrennungsanlage nach Anspruch 14, dadurch gekennzeichnet, daß eine der Abkühlvorrichtungen ein Naßentascher (2) ist und ein sich an das Stabsieb (20) anschließender Grobascheschacht (12) vom Ascheschacht (11) zum Naßentascher (2) führt.

16. Abfallverbrennungsanlage nach Anspruch 15, dadurch gekennzeichnet, daß der Ascheschacht (11) eine unter das Stabsieb (20) schwenkbare Klappe (24) aufweist.

17. Abfallverbrennungsanlage nach einem der Ansprüche 12 bis 16, dadurch gekennzeichnet, daß die Fördervorrichtung (25) unterhalb des Ascheschachtes (11) quer zum Aschestrom, parallel zu den Achsen der Walzen (9) verläuft und ein Ende mit dem Schmelzofen (26) verbunden ist.

18. Abfallverbrennungsanlage nach Anspruch 17, dadurch gekennzeichnet, daß die Fördervorrichtung (25) eine Förderrinne, insbesondere eine Vibrationsrinne, ist.

19. Abfallverbrennungsanlage nach einem der Ansprüche 12 bis 18, dadurch gekennzeichnet, daß der Schmelzofen (26) an seiner Decke (34) eine Öffnung (36) aufweist, an die eine mit einer Dosierklappe (41) versehene und mit dem Feuerraum (13) verbundene Abgasleitung (37) angeschlossen ist.

20. Abfallverbrennungsanlage nach einem der Ansprüche 12 bis 19, dadurch gekennzeichnet, daß im oberen Drittel des Schmelzofens (26) zwei bis zehn mit Heizöl oder Erdgas betriebende Sauerstoffbrenner (28) angeordnet sind.

## Claims

1. Process for treating residues in a refuse incineration plant, wherein the residues consisting of grate ash, boiler ash and filter dust are melted continuously with a supply of energy, the molten residues are cooled, and waste gas produced during melting is passed into a firing chamber of the refuse incineration plant,
characterised in that the residues are melted in a separate melting furnace (26), and the grate ash, if necessary after sorting out of larger components, and the boiler ash are conveyed to the melting furnace (26) together in a conveying device (25), metals are first of all removed in part from the filter dust, and the filter dust is then conveyed to the melting furnace (26).

2. Process according to claim 1, characterised in that a metal-enriched melt is drawn off at the base (32) of the melting furnace (26) and is cooled, and a residual melt is drawn off from the melting furnace at a side wall (29) of the melting furnace (26) at the level of a surface of a melt bath, and is then cooled.

3. Process according to claim 1 or 2, characterised in that, for the partial removal of metals, the filter dust is washed in the washing plant (5) with water, in particular with the wash water from a flue gas washer (4).

4. Process according to one of claims 1 to 3, characterised in that, before the grate ash and boiler ash are introduced into the conveyor device (25), components having a diameter greater than a value of between 100 to 300 mm are sorted out.

5. Process according to claim 4, characterised in that these larger components of the grate and boiler ash are passed into a wet ash-removal installation (2).

6. Process according to claim 1 to 5, characterised in that the grate ash and boiler ash are conveyed through the gas-tight conveying device (25) to the melting furnace (26) at a temperature of 400 to 700°C, in particular 500 to 600°C.

7. Process according to one of claims 1 to 6, characterised in that a partial stream of waste gas from the melting furnace (26) is passed through the gas-tight conveying device (25) in counter-flow to the grate ash and boiler ash, and the other partial stream of waste gas is passed through a meterable waste gas pipe (37) to the firing chamber (13) of the refuse incineration plant.

8. Process according to one of claims 1 to 7, characterised in that the melting furnace (26) is heated directly with oxygen burners (28) operated with heating oil or natural gas.

9. Process according to one of claims 1 to 8, characterised in that the residues are melted in the melting furnace at a temperature of 1100 to 1500°C, in particular 1300 to 1500°C.

10. Process according to one of claims 1 to 9, characterised in that the residence time of the residues in the melting furnace (26) is 30 to 90 minutes.

11. Process according to one of claims 1 to 9, characterised in that melting agents are added to the melt bath in the melting furnace (26).

12. Refuse incineration plant for carrying out the process according to claim 1, having a combustion grate, an ash shaft, and a cooling device for residues, and apparatus for treating residues comprising at least one melting chamber and at least one burner, characterised in that the apparatus for treating residues has a separate melting furnace (26) with an aperture (38) for supplying filter dust and an aperture (35) for supplying grate and boiler ash, and a conveying device (25) for conveying grate and boiler ash to the melting furnace (26).

13. Refuse incineration plant according to claim 12, characterised in that the melting furnace (26) has an aperture (33) at the base (32) for drawing off the metal-enriched melt, and an aperture (30) in a side wall (29) for drawing off the residual melt.

14. Refuse incineration plant according to claim 12 or 13, characterised in that the ash shaft (11) is provided with a bar screen (20), the spacing of the bars (21) being between 100 and 300 mm.

15. Refuse incineration plant according to claim 14, characterised in that one of the cooling devices is a wet ash-removal installation (2) and a coarse-ash shaft (12) adjoining the bar screen (20) leads from the ash shaft (11) to the wet ash-removal installation (2).

16. Refuse incineration plant according to claim 15, characterised in that the ash shaft (11) has a pivotable flap (24) below the bar screen (20).

17. Refuse incineration plant according to one of claims 12 to 16, characterised in that the conveyor device (25) runs below the ash shaft (11), transverse to the flow of ash and parallel to the axes of the rollers (9), and one end is connected to the melting furnace (26).

18. Refuse incineration plant according to claim 17, characterised in that the conveyor device (25) is a conveyor trough, in particular a vibrating trough.

19. Refuse incineration plant according to one of claims 12 to 18, characterised in that the melting furnace (26) has an aperture (36) in its cover (34), to which a waste gas pipe (37) provided with a metering flap (41) and connected to the firing chamber (13) is joined.

20. Refuse incineration plant according to one of claims 12 to 19, characterised in that in the upper third of the melting furnace (26), between two and ten oxygen burners (28) operated with heating oil or natural gas are provided.

## Revendications

1. Procédé pour traiter les résidus d'une installation d'incinération de déchets, dans lequel les résidus constitués de cendres de grille, de cendres de chaudière et de poussières de filtre sont fondus en continu avec adduction d'énergie, dans lequel les résidus fondus sont refroidis et les gaz résiduaires provenant de la fusion sont envoyés dans une chambre d'incinération de l'installation d'incinération de déchets,
caractérisé en ce que les résidus sont fondus dans un four de fusion séparé (26) dans lequel les cendres de grille, éventuellement après élimination des constituants les plus grossiers, et les cendres de chaudière, sont envoyées ensemble par un dispositif d'alimentation (25) au four de fusion (26) et dans lequel les métaux sont tout d'abord partiellement éliminés des poussières de filtre, tandis que les poussières de filtre sont ensuite envoyées au four de fusion (26).

2. Procédé selon la revendication 1, caractérisé en ce qu'une masse fondue enrichie en métaux est extraite par le fond (32) du four de fusion (26) et est refroidie et qu'une masse fondue résiduelle est extraite et refroidie du four de fusion (26) par une paroi latérale (29) du four de fusion (26) à la hauteur de la surface du bain fondu.

3. Procédé selon la revendication 1 ou 2, caractérisé en ce que les poussières de filtre sont lavées pour éliminer partiellement les métaux dans l'installation de lavage (5) avec de l'eau de lavage et, en particulier, avec de l'eau de lavage provenant d'un laveur à gaz de fumées (4).

4. Procédé selon l'une des revendications 1 à 3, caractérisé en ce que les constituants dont le diamètre est supérieur à une valeur comprise entre 100 et 300 mm sont séparés avant l'introduction des cendres de grille et des cendres de chaudière dans l'installation d'alimentation (25).

5. Procédé selon la revendication 4, caractérisé en ce que ces constituants grossiers des cendres de grille et de chaudière sont envoyés à un séparateur de poussières par voie humide (2).

6. Procédé selon l'une des revendications 1 à 5, caractérisé en ce que les poussières de grille et les poussières de chaudière sont amenées au four de fusion (26) par le dispositif d'alimentation étanche (25) à une température de 400 à 700°C et, en particulier, de 500 à 600°C.

7. Procédé selon l'une des revendications 1 à 6, caractérisé en ce qu'une partie des gaz résiduaires du four de fusion (26) est amenée à contre-courant par rapport aux poussières de grille et aux poussières de chaudière par l'installation d'alimentation étanche aux gaz (25) et que l'autre partie des gaz résiduaires est amenée par une conduite de gaz résiduaires réglable (27) à la chambre d'incinération (13) de l'installation d'incinération de déchets.

8. Procédé selon l'une des revendications 1 à 7, caractérisé en ce que le four de fusion (26) est chauffé directement par des brûleurs à oxygène (28) fonctionnant avec une huile de chauffage ou du gaz naturel.

9. Procédé selon l'une des revendications 1 à 8, caractérisé en ce que les résidus sont fondus dans le four de fusion à une température de 1100 à 1500°C et, en particulier, de 1300 à 1500°C.

10. Procédé selon l'une des revendications 1 à 9, caractérisé en ce que le temps de séjour des résidus dans le four de fusion (26) est compris entre 30 et 90 minutes.

11. Procédé selon l'une des revendications 1 à 10, caractérisé en ce que des additifs de fusion sont ajoutés au bain de fusion du four de fusion (26).

12. Installation d'incinération de déchets pour mettre en oeuvre le procédé de la revendication 1, avec une grille d'incinération, un puits à cendres et un dispositif de refroidissement des résidus, un dispositif pour traiter les résidus avec au moins une enceinte de fusion et au moins un brûleur, caractérisée en ce que le dispositif pour traiter les résidus comprend un four de fusion séparé (26) avec une ouverture (38) pour amener les poussières de filtre et une ouverture (35) pour amener les cendres de grille et de chaudière, et un dispositif d'alimentation (25) pour amener les cendres de grille et les cendres de chaudière au four de fusion (26).

13. Installation d'incinération de déchets selon la revendication 12, caracterisée en ce que le four de fusion (26) présente, dans son fond (32), une ouverture (33) pour évacuer la masse fondue enrichie en métaux et, sur une paroi latérale (29), une ouverture (30) pour évacuer la masse fondue restante.

14. Installation d'incinération de déchets selon la revendication 12 ou 13, caractérisée en ce que le puits à cendres (11) est équipé d'un crible à barreaux (30) avec une distance entre les barreaux (21) comprise entre 100 et 300 mm.

15. Installation d'incinération de déchets selon la revendication 14, caractérisée en ce que l'un des dispositifs de refroidissement est un séparateur de cendres par voie humide (2) et qu'un puits à cendres grossières (12) raccordé au crible à barreaux (20) mène du puits a cendres (11) au séparateur de cendres par voie humide (2).

16. Installation d'incinération de déchets selon la revendication 15, caractérisée en ce que le puits à cendres (11) présente un clapet (24) pouvant pivoter en dessous du crible à barreaux (20).

17. Installation d'incinération de déchets selon l'une des revendications 12 à 16, caractérisée en ce que le dispositif d'alimentation (25) est disposé en dessous du puits à cendres (11), transversalement par rapport au déplacement des cendres et parallèlement aux axes des rouleaux (9), et qu'une extrémité est raccordée au four de fusion (26).

18. Installation d'incinération de déchets selon la revendication 17, caractérisée en ce que le dispositif d'alimentation (25) est une goulotte de transport et, en particulier, une goulotte vibrante.

19. Installation d'incinération de déchets selon l'une des revendications 12 à 18, caractérisée en ce que le four de fusion (26) comporte,sur son couvercle (34), une ouverture (36) à laquelle est raccordée la conduite de gaz résiduaires (37) pourvue d'un clapet de dosage (41) et raccordée à la chambre d'incinération (13).

20. Installation d'incinération de déchets selon l'une des revendications 12 à 19, caractérisée en ce que, dans le tiers supérieur du four de fusion (26), sont disposés de deux à dix brûleurs à oxygène (28) fonctionnant avec de l'huile de chauffage ou du gaz naturel.
